Europäisches Patentamt

European Patent Office

Office européen des brevets

(11) Veröffentlichungsnummer: **0 199 026 B1**

(12) **EUROPÄISCHE PATENTSCHRIFT**

(45) Veröffentlichungstag der Patentschrift: **29.05.91**

(51) Int. Cl.⁵: **G06K 11/10**

(21) Anmeldenummer: **86102598.9**

(22) Anmeldetag: **28.02.86**

(54) **Messtisch für eine Koordinatenmessvorrichtung.**

(30) Priorität: **01.04.85 DE 3511863**

(43) Veröffentlichungstag der Anmeldung:
**29.10.86 Patentblatt 86/44**

(45) Bekanntmachung des Hinweises auf die
Patenterteilung:
**29.05.91 Patentblatt 91/22**

(84) Benannte Vertragsstaaten:
**CH DE FR GB IT LI**

(56) Entgegenhaltungen:
**US-A- 4 054 746**
**US-A- 4 088 842**

**DISPLAYS, Band 1, Nr. 2, Juli 1979, Seiten
83-93, IPC Business Press, Surrey, GB; D.J.
GROVER: "Graphics tablets - a review"**

**NATIONAL TELECOMMUNICATIONS CONFE-
RENCE, New Orleans, Louisiana, 29. November - 3. Dezember 1981, Band 4, Seiten
G5.4.1-G.5.4.5, IEEE, New York, US; Y. TAKE-
DA et al.: "A new data tablet superposed by
a plasma display panel"**

(73) Patentinhaber: **KONTRON ELEKTRONIK GMBH
Oskar-von-Miller-Strasse 1
W-8057 Eching(DE)**

(72) Erfinder: **Jacob-Grinschgl, Wolfgang
Rumfordstrasse 40
W-8000 München(DE)**
Erfinder: **Müller, Udo
Furtweg 20 b
W-8044 Unterschleissheim(DE)**

(74) Vertreter: **Dirscherl, Josef et al
c/o Bayerische Motoren Werke Aktiengesellschaft, Patentabteilung AJ-3, Postfach 40 02
40, Petuelring 130
W-8000 München 40(DE)**

## Beschreibung

Die Erfindung betrifft einen Meßtisch für eine Koordinatenmeßvorrichtung nach dem Oberbegriff des Patentanspruchs 1.

Ein derartiger Meßtisch für eine Koordinatenmeßvorrichtung ist aus der US-A-4 088 842 bekannt. Der aus diesem Dokument bekannte Meßtisch weist mehrere parallele Gitterleiter für jede Koordinate auf, die mittels eines Ringzählers nacheinander aktivierbar sind. Zudem sind benachbarte Gitterleiter paarweise windungsartig miteinander verbunden, so daß die zwei Gitterleiter eines Paares gegensinnig geschaltet werden.

Ferner ist firmenintern ein Meßtisch, auch Digitizer genannt, bekannt, dessen Gitterleiter einzeln nacheinander aktiviert, d. h. von Strom durchflossen oder an eine Auswerteschaltung angeschaltet werden. Bei diesem Meßtisch wird das Meßsignal einer Auswerteschaltung zugeführt, die u. a. eine zweimalige Differentiation des Meßsignals vornimmt.

Der Erfindung liegt die Aufgabe zugrunde, einen Meßtisch der eingangs genannten Art zu schaffen, mit dem selbst bei Verwendung einer vereinfachten Auswerteschaltung eine hohe Meßgenauigkeit erzielt werden kann.

Diese Aufgabe wird durch die kennzeichnenden Merkmale des Patentanspruchs 1 gelöst.

Durch die gegensinnige Aktivierung von jeweils mindestens zwei benachbarten Gitterleitern wird eine Differenzbildung der magnetischen Wirkung des Stromflusses durch die jeweils aktivierten Gitterleiter auf den induktiven Meßaufnehmer erreicht bzw., wenn der Meßaufnehmer als Sender und die Gitterleiter als Empfänger dienen, eine Differenzbildung der durch die unterschiedlichen magnetischen Feldstärken an den aktivierten Gitterleitern erzeugten Induktionsspannungen. Bei genügend geringem Abstand der in Serie geschalteten Gitterleiter und bei aufeinanderfolgender Aktivierung der aus jeweils mindestens zwei Gitterleitern bestehenden spulenartigen Gebilde wird ein Meßsignal erzeugt, welches gegenüber den mit üblichen Meßtischen erzeugten Meßsignalen bereits einfach differenziert ist. Die Auswerteschaltung braucht daher lediglich noch so bemessen zu sein, daß sie das Meßsignal lediglich noch einmal differenziert. Durch die einander überlappende Anordnung der aus den in Serie geschalteten Gitterleitern gebildeten spulenartigen Gebilde wird eine hohe Meßgenauigkeit erzielt.

Gemäß einer vorteilhaften Weiterbildung der Erfindung bilden die windungsartig miteinander verbundenen Gitterleiter jeweils eine Spule mit mehreren Windungen, so daß bei Verwendung der Gitterleiter als Sender eine geringere Stromstärke zur Erzielung eines bestimmten Magnetflusses erforderlich ist bzw. bei Verwendung der Gitterleiter als Empfänger eine höhere Induktionsspannung auftritt.

Vorzugsweise weisen dabei die Spulen jeweils eine gleiche Anzahl von quer zu der zugeordneten Koordinatenrichtung verlaufende Windungsbereiche auf.

Eine besonders günstige Ausführungsform zur Realisierung der überlappenden Anordnung ist darin zu sehen, daß die Gitterleiter als gedruckte Leitungsbahnen auf einer dünnen Folie aufgebracht sind und daß mehrere derartige Folien versetzt übereinander gestapelt sind.

Die Erfindung ist im folgenden anhand schematischer Zeichnungen an mehreren Ausführungsbeispielen ergänzend beschrieben.

Fig. 1    zeigt die Wirkungsweise des Meßtisches;

Fig. 2    zeigt eine Anordnung der Gitterleiter auf einem Meßtisch, bei dem jeweils zwei benachbarte Gitterleiter haarnadelförmig miteinander verbunden sind;

Fig. 3    zeigt eine meanderförmige Gestalt der Gitterleiter;

Fig. 4    zeigt eine gegenüber Fig. 2 abgeänderte Ausführungsform, und

Fig. 5    zeigt in Serie geschaltete Gitterleiterpaare in überlappender Anordnung.

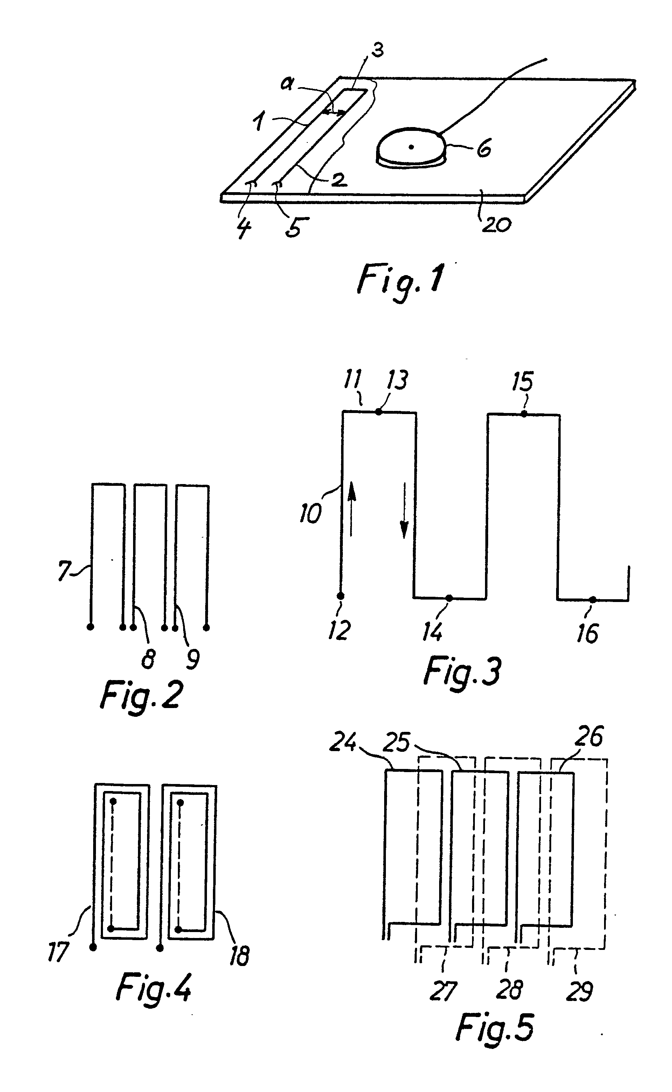

Fig. 1 dient zur Erläuterung der Wirkungsweise des Meßtisches. Man erkennt in Fig. 1 zwei Gitterleiter 1 und 2, die durch ein quer dazu verlaufendes Leiterstück 3 gegensinnig in Serie geschaltet sind. Wenn an die Anschlüsse 4 und 5 des Gitterleitergebildes 1, 2, 3 eine Stromquelle angeschlossen wird, dann erzeugt der Gitterleiter 1 in einem als Spule ausgebildeten induktiven Meßaufnehmer 6 einen Magnetfluß einer bestimmten Richtung, während der Gitterleiter 2 aufgrund der gegensinnigen Stromrichtung in diesem einen Magnetfluß mit umgekehrter Richtung erzeugt. Diese beiden Magnetflüsse heben sich jedoch nicht auf, da die Gitterleiter 1 und 2 einen Abstand a voneinander haben, so daß also der Gitterleiter 2 näher an dem Meßaufnehmer 6 liegt und einen stärkeren Magnetfluß erzeugt.

Fig. 2 zeigt drei nebeneinander liegende Paare 7, 8 und 9 von jeweils zwei in Serie geschalteten Gitterleitern. Tatsächlich sind auf einem Meßtablett je nach dessen Größe einige zehn bis hundert Gitterleiter für jede Koordinatenrichtung vorgesehen, um eine genügende Meßgenauigkeit zu erzielen.

Bei aufeinanderfolgender Erregung der Gitterleiterpaare 7, 8 und 9 entsteht in dem Meßaufnehmer eine Meßspannung, die der ersten Ableitung einer Meßsignalspannung entspricht, wie sie entstehen würde, wenn die benachbart liegenden Gitterleiter jedes Paares 7, 8, 9 nicht miteinander verbunden wären, sondern die Gitterleiter 1, 2 einzeln und aufeinanderfolgend von einem gleichen Strom durchflossen werden würden, wie bei bekannten Meßtischen. Dadurch, daß jeweils zwei benachbarte Gitterleiter gegensinnig von Strom durchflossen werden, entsteht also eine differenzierende Wirkung.

Die Genauigkeit der Differentiation hängt dabei im wesentlichen von dem Abstand a der zusammengeschalteten Paare von Gitterleitern ab.

Fig. 3 zeigt eine andere Anordnung der Gitterleiter, die eine einzige, meanderförmige Leiterbahn 10 bilden, welche an den die eigentlichen Gitterleiter verbindenden kurzen Leiterabschnitten 11 Anschlüsse 12, 13, 14, 15 und 16 aufweisen. Beim Betrieb der Meßvorrichtung werden nacheinander die Anschlüsse 12 und 14, 15 und 13, 14 und 16 usw. an den ersten bzw. zweiten Pol einer Stromquelle angeschaltet. Man erkennt, daß dadurch jeweils zwei Gitterleiter gegensinnig von Strom durchflossen werden.

Fig. 4 zeigt eine weitere Ausführungsform eines Meßtisches, bei der die jeweils zusammengehörenden zwei Gitterleiter zu Spulen 17,18 erweitert sind. Dadurch wird erreicht, daß zum Erzeugen eines bestimmten Magnetflusses ein geringerer Strom durch die Gitterleiter erforderlich ist, so daß die Ansteuerschaltungen kostengünstiger realisiert werden können.

Fig. 5 zeigt schematisch eine bevorzugte Ausführungsform eines Meßtisches, bei der sechs Spulen mit jeweils einer Windung einander überlappend angeordnet sind. Die Spulen 24,25 und 26 liegen dabei in einer ersten Ebene, während die Spulen 27 28 und 29 in einer davon getrennten Ebene liegen. Eine derartige Anordnung der Spulen läßt sich realisieren, indem die Spulen 24,25 und 26 als Leiterbahnen auf einer Folie aufgebracht sind und die Spulen 27,28 und 29 als Leiterbahnen auf einer getrennten Folie, wobei beide Folien sodann übereinander gelegt sind derart, daß die Spulen 27,28 und 29 versetzt zu den Spulen 24,25 und 26 liegen. Die Aktivierung der Spulen geschieht in der Reihenfolge 24,27,25,20,26,29.

Die Erfindung läßt sich nicht nur anwenden für den Fall, daß die Gitterleiter von Strom durchflossen sind und in dem Meßaufnehmer 6 ein Meßsignal erzeugt wird, sondern auch für den umgekehrten Fall, daß der Meßaufnehmer von einem Strom durchflossen wird und die jeweils zusammengeschalteten Paare von Gitterleitern nacheinander an eine Auswerteschaltung angeschlossen werden. In diesem Fall ist es jedoch erforderlich, einen sich ändernden Strom durch den Meßaufnehmer zu schicken, beispielsweise einen Wechselstrom, dessen Frequenz höher ist als die Umschaltfrequenz der Gitterleiter.

Die Erfindung läßt sich auch anwenden zusammen mit der gleichzeitig eingereichten Erfindung des Anmelders (EP-A-0 207 217) mit dem Titel "Koordinatenmeßvorrichtung", die ihrerseits eine einfach differenzierende Wirkung hat und die in Kombination mit der oben beschriebenen Erfindung eine zweifache Differentiation ergibt.

## Ansprüche

1. Meßtisch für eine Koordinatenmeßvorrichtung zum Bestimmen der Position eines induktiven Meßaufnehmers, mit mehreren parallelen Gitterleitern für jede Koordinate, die nacheinander aktivierbar sind, bei dem jeweils mindestens zwei benachbarte Gitterleiter zur Bildung spulenartiger Gebilde windungsartig miteinander verbunden sind, wodurch jeweils mindestens zwei benachbarte Gitterleiter gegensinnig geschaltet aktiviert werden, dadurch gekennzeichnet, daß die aus den in Serie geschalteten Gitterleitern gebildeten spulenartigen Gebilde einander überlappend angeordnet sind.

2. Meßtisch nach Anspruch 1, dadurch gekennzeichnet, daß die windungsartig miteinander verbundenen Gitterleiter jeweils eine Spule mit mehreren Windungen bilden.

3. Meßtisch nach Anspruch 2, dadurch gekennzeichnet, daß die Spulen jeweils eine gleiche Anzahl von quer zu der zugeordneten Koordinatenrichtung verlaufenden Windungsbereichen aufweisen.

4. Meßtisch nach einem der Ansprüche 1 bis 3, dadurch gekennzeichnet, daß die Gitterleiter als gedruckte Leitungsbahnen auf einer dünnen Folie aufgebracht sind und daß mehrere derartige Folien versetzt übereinander gestapelt sind.

## Claims

1. A measuring table for a coordinate measurement system for determining the position of an inductive measurement pick-up, comprising a number of parallel grid conductors for each coordinate which are activated in turn, at least each pair of adjacent grid conductors being interconnected in the manner of coils to form coil-like structures, and at least two adjacent grid conductors being connected in opposite directions when activated, characterised in that the coil-like strucures formed from the series-connected grid conductors are arranged to overlap one another.

2. A measuring table according to claim 1, characterised in that the grid conductors connected in the manner of coils each form a coil having a number of turns.

3. A measuring table according to claim 2, characterised in that the coils each have the same number of turn regions extending transversely to the associated coordinate direction.

4. A measuring table according to any of claims 1 to 3, characterised in that the grid conductors are printed circuits disposed on a thin foil, and a number of such foils are offset and stacked on one another.

**Revendications**

1. Table de mesure pour un système de détermination de coordonnées pour déterminer la position d'un capteur de mesure inductif, avec plusieurs circuits grilles parallèle pour chaque coordonnée, qui sont activables l'un après l'autre, dans laquelle au moins deux circuits grilles successifs sont réunis en bobine pour fermer un réseau de spires, dans lequel au moins deux circuits grilles contigüs sont activés par branchement en sens inverse, caractérisé en ce que les réseaux de spires formés par les circuits grilles branchés en série sont disposés en superposition.

2. Table de mesure selon revendication 1, caractérisée en ce que les circuits grilles reliés entre eux en bobine constituent chaque fois une bobine de plusieurs spires.

3. Table de mesure selon la revendication 2, caractérisée en ce que les bobines présentent chaque fois des zones de spires disposées transversalement par rapport au sens de coordonnée correspondant.

4. Table de mesure selon l'une des revendications 1 à 3, caractérisé en ce que les circuits grilles sont réalisés sous forme de piste conductrices imprimées sur une feuille mince et qu'on empile en décalage plusieurs feuilles de ce type.

Fig.1

Fig.2

Fig.3

Fig.4

Fig.5